Europäisches Patentamt

European Patent Office

Office européen des brevets

(19)

(11) Publication number: **0 461 845 A2**

# EUROPEAN PATENT APPLICATION

(12)

(21) Application number: **91305232.0**

(22) Date of filing: **11.06.91**

(51) Int. Cl.⁵: **B62D 25/20**

(30) Priority: **12.06.90 GB 9013089**

(43) Date of publication of application:
**18.12.91 Bulletin 91/51**

(84) Designated Contracting States:
**BE DE DK FR GB IT NL**

(71) Applicant: **YORK TRAILER COMPANY LIMITED**
**Yafforth Road**
**Northallerton North Yorkshire, DL7 8UD (GB)**

(72) Inventor: **Davis, Robert Clive Browning**
**134 Front Street, Sowerby, Thirsk**
**North Yorkshire, YO7 1JJ (GB)**

(74) Representative: **Allen, Oliver John Richard et al**
**Lloyd Wise, Tregear & Co. Norman House**
**105-109 Strand**
**London, WC2R 0AE (GB)**

(54) **Improvements in and relating to trailer floors.**

(57)   A trailer having lateral floor supporting beams carried by the chassis mainrails thereof is described. The beams pass through the mainrails, the regions thereof which intersect the mainrails being curved away from the remainder so that the floor supporting surface of the beams is substantially flush with the uppermost surface of the mainrails.

EP 0 461 845 A2

Jouve, 18, rue Saint-Denis, 75001 PARIS

This invention relates to trailers and semi-trailers which will be collectively referred to hereinafter as "trailers" and more particularly to the flooring of such trailers.

Known trailer floors are formed from a number of sections each consisting of a plurality of hard wood planks, lap jointed on each side so that they interlock together. The floor is carried on a series of floor supporting beams which run laterally across the trailer. The floor supporting beams, known as "floor bearers" are in turn carried by the mainrails of the trailer chassis through which they pass. The upper flanges of the chassis mainrails are therefore positioned above the floor bearers and a floor section is provided between each adjacent pair of mainrails with the planks thereof being so dimensioned that, together with the mainrail top flanges, they form a flat floor surface. The edges of the floor are defined by the side raves of the trailer.

There is an increasing movement away from the use of hard woods particularly because of the upsurge of the "green" movement and towards the use of soft woods which are a renewable resource. As a result of this, in place of the known hard wood planks, there has been increasing use of plywood based soft wood boards as a flooring medium. These boards, however, suffer from the problem that they are in fact more expensive and they are furthermore vulnerable to moisture ingress from the edges.

To allow thinner boards to be used, to save expense and to reduce the number of edges which have to be sealed, in recent years trailer floors have been "overlaid". In "overlaid" floors, the boards are laid across the top of the top flanges of the chassis mainrails with the side raves of the trailer being correspondingly raised to seal the outer edges of the boards. To support the boards in the regions between the chassis mainrails and the side raves, packers are positioned between the tops of the floor bearers and the boards. These packers are made from hard wood. In overlaid floors the panels are supported on all four sides, whereas with plank floors positive support is provided at the ends but on only one side. As a result of the better support, overlaid board floors can be made thinner and they are therefore lighter and less expensive than would be the case if the soft wood boards were cut up and used as planks.

However, as noted above, hard wood packers are required with overlaid floors which increases the weight of the floor and adds to the expense thereof due to the cost of the packers themselves and the installation time.

A trailer in accordance with the invention comprises a plurality of lateral floor supporting beams carried by the trailer chassis mainrails, the arrangement being such that the floor supporting surface of the beams is substantially flush with the uppermost surface of the chassis mainrails.

This means that a soft wood floor can be provided without the need for hard wood packers.

In a particularly preferred embodiment, the lateral floor supporting beams, the "floor bearers", are bent or joggled at appropriate points along their length, the joggled regions passing through chassis mainrails and the remainder forming the floor support. Thus, for the general form of trailers, the floor bearers will comprise a generally straight beam having two regions curved away from the main beam axis which regions are passed through the chassis mainrails. The main portion of the beam will therefore have an upper surface which lies substantially flush with the top flanges of the chassis mainrails to provide a floor support surface.

The invention will now be further described by way of example with reference to the accompanying drawings in which:

Figure 1 is a vertical section through a known type of floor;

Figure 2 is a vertical section through the floor of a trailer in accordance with the invention;

Figure 3 shows an alternative embodiment of the floor shown in Figure 2;

Figure 4 is an enlarged view of the portion of the floor of Figure 2 in circle A; and

Figure 5 is an enlarged view of the portion of the floor of Figure 3 in circle B.

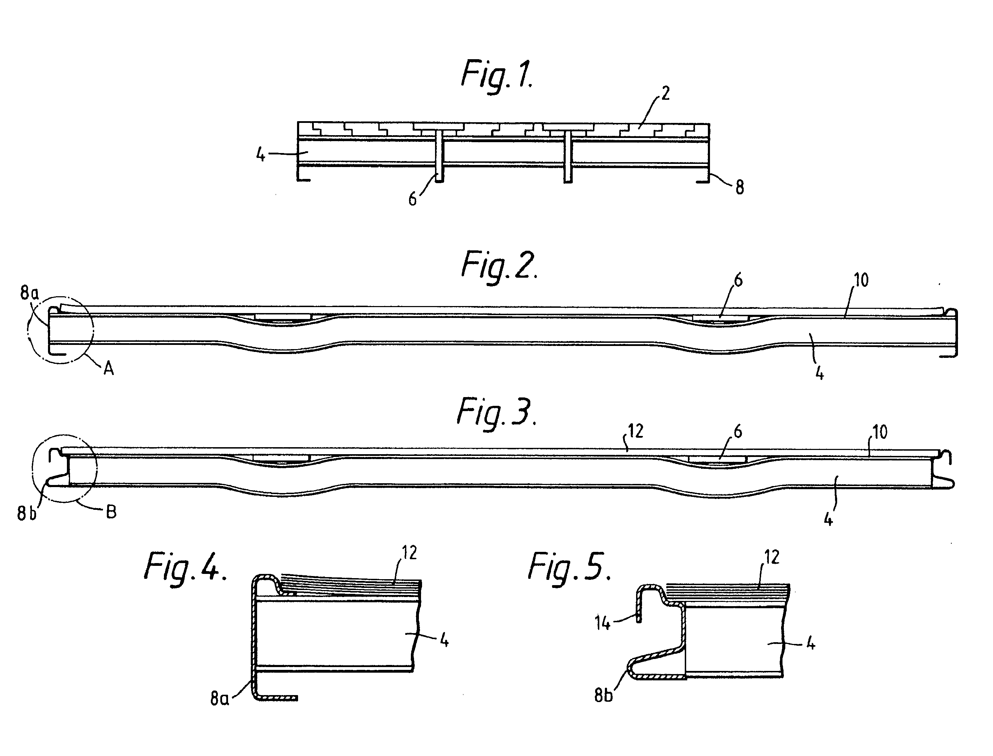

Figure 1 illustrates one known method of forming a trailer floor. In this arrangement hard wood planks 2, lap jointed at each side, are laid on straight floor bearers 4. The floor bearers 4 pass through and are supported by the chassis mainrails 6. The thickness of the planks 2 is arranged so that the upper surface of the planks 2 and the upper surface of the top flanges of the chassis mainrails 6 form a flat surface edged by the side raves 8 of the trailer.

The floor illustrated in Figures 2 to 5 differs from this in that no hard wood members are required. Instead the floor bearers 4 are so bent, or joggled, that they can be passed through the chassis mainrails 6 but with the majority of the upper surface of the top flange 10 of each floor bearer being flush with the top flange surface of the chassis mainrail 6. Panels 12 of soft wood are then carried on the substantially continuous upper surface defined by the chassis mainrail 6 and the top flanges 10 of the floor bearers 4. The edges of the panels 12 are supported by the side raves 8 of the trailer. Two types of side rave are illustrated here, 8a and 8b. The side rave 8a shown in Figures 2 and 4 is a conventional side rave whilst that 8b shown in Figures 3 and 5 is what is known as a "reverse" side rave. In a reverse side rave the shape of the rave is such that it extends outwards from the main trailer body and defines a hook, see 14, for attaching the tensioning straps of curtains employed to close the trailer sides.

It will be appreciated that the floor bearers 4 illustrated in Figures 2 to 5 are produced by bending two sections of a beam away from the main axis of the beam. These bent, or joggled, sections can then be passed through the chassis mainrails of the trailer so that the floor bearer 4 is itself supported whilst the majority of the floor bearer serves as a direct floor support.

The panels 10 of soft wood are supported on all four edges and, because of this, they can be made relatively thin. The arrangement is thus made much less expensive than conventional arrangements since firstly, no packers are required, and secondly, thinner panels of soft wood can be employed. As noted above, however, the panels are sealed at their edges which decreases the risk of moisture ingress to the panels without the need for employing specially raised side raves.

## Claims

1. A trailer comprising a plurality of lateral floor supporting beams carried by the trailer chassis mainrails, the arrangement being such that the floor supporting surface of the beams is substantially flush with the uppermost surface of the chassis mainrails.

2. A trailer as claimed in Claim 1 wherein each lateral floor supporting beam has a number of regions thereof curved away from the main beam axis.

3. A trailer as claimed in Claim 1 or Claim 2 wherein the lateral floor supporting beams pass through apertures provided in the chassis mainrails.

4. A trailer as claimed in Claim 3 when dependant on Claim 2 wherein the number of curved regions of each lateral beam is equal to the number of chassis mainrails, the curved regions passing through the mainrails' apertures.

5. A trailer as claimed in any preceding Claim wherein a floor is supported on the lateral beams and the uppermost surface of the chassis mainrails.

6. A trailer as claimed in Claim 6 wherein the floor comprises one or more softwood boards.

7. A trailer as claimed in either Claim 5 or Claim 6 wherein the side edges of the floor are supported by raves.

Fig.1.

Fig.2.

Fig.3.

Fig.4.

Fig.5.